# EUROPEAN PATENT APPLICATION

(11) **EP 1 601 220 A1**
(43) Date of publication of application: **30.11.2005**
(21) Application number: 04722680.8
(22) Date of filing: 23.03.2004
(51) Int. Cl.: H04Q 7/38

(54) **MOBILE DEVICE, SERVICE INFORMATION PROVIDING DEVICE, AND ROAMING METHOD**

(30) Priority: 25.03.2003 JP 2003083535
(71) Applicant: MATSUSHITA ELECTRIC INDUSTRIAL CO., LTD., Kadoma-shi, Osaka 571-8501 (JP)
(72) Inventor: MINAMIDA, Noriaki, Ishikawa 920-0348 (JP); WATANABE, Masatoshi, Kanagawa 232-0064 (JP)
(74) Representative: Grünecker, Kinkeldey, Stockmair & Schwanhäusser Anwaltssozietät
(86) International application number: PCT/JP2004/003932
(87) International publication number: WO 2004/086803

(57) **Abstract**

A mobile apparatus that can perform roaming without being provided with a region preset table storing usable frequency information and so forth for each area. A service information provision apparatus that provides this mobile apparatus with various kinds of information necessary when roaming is performed. A roaming method associated with the movement of this mobile apparatus. A mobile apparatus 100 performs radio communication by means of a cellular method, and has an identification information storage section 101 that stores identification information of a network provider that provides a radio communication service by means of a cellular method, a specific frequency transmitting/receiving section 102 that transmits a signal containing identification information and receives a signal containing information on frequency and access technology corresponding to the identification information, and a frequency search section 103 that carries out a frequency search when roaming is performed using a frequency and access technology corresponding to identification information indicated by a signal received by specific frequency transmitting/receiving section 102.

## Description

### Technical Field

The present invention relates to a mobile apparatus that performs cellular radio communication, a service information provision apparatus that provides various kinds of information to this mobile apparatus, and a roaming method associated with the movement of this mobile apparatus.

### Background Art

Roaming is conventionally known whereby, when a network provider providing a cellular radio communication service does not provide a radio communication service in a particular area, in that non-served area a mobile apparatus registered with that network provider can use a radio communication service provided by another network provider so as to be able to perform radio communication.

A mobile apparatus provided with this kind of roaming function contains a region preset table that stores usable frequencies and access technologies for each network provider and for each service provision area. Then, when the mobile apparatus provided with this kind of roaming function receives a signal containing current position information for that mobile apparatus from a base station, the mobile apparatus can ascertain a usable frequency and access technology for the current position by searching the region preset table.

Also, a mobile apparatus is known that is provided with a region preset function, differing from a roaming function, whereby radio broadcast reception settings are automatically adjusted in accordance with the movement of that mobile apparatus (see Unexamined Japanese Patent Publication No.HEI 11-284532 (pages 4 to 6, and FIG.2), for example). FIG.1 is a block diagram showing the configuration of the region preset function section in this mobile apparatus. A region preset table 30 stores information on frequencies used for radio broadcasting for each broadcasting area. Then, when a radio receiving section 31 receives a radio signal containing current position information for the mobile apparatus transmitted from a base station, a control section 32 searches region preset table 30, and if control section 32 judges as it is necessary to change the current radio broadcasting reception setting, control section 32 extracts frequency information corresponding to the current position information for the mobile apparatus - that is, information indicating the frequency used for radio broadcasting in the broadcasting area that includes the current position of the mobile apparatus - by searching region preset table 30.

However, with this kind of conventional mobile apparatus, since roaming and radio broadcasting reception setting changes are carried out based on current position information transmitted from an external source such as a base station, a region preset table 30 is absolutely essential in which frequency information, access technology information, or radio broadcasting frequency information necessary for performing roaming is stored for each applicable area.

Therefore, a problem with this kind of conventional mobile apparatus is that the capacity of a storage element used for the region preset table 30 must be increased in proportion to the size of a roaming or radio broadcasting coverage area, and therefore manufacturing costs rise steeply as the coverage area increases in size. Another problem with this kind of conventional mobile apparatus is that power consumption increases in line with an increase in the roaming or radio broadcasting coverage area, and therefore when a rechargeable battery is used as the power source, the mobile apparatus can only be used for a short time on a single charge, and when a disposable battery is used as the power source, battery life is short. These problems become all the more apparent when it is attempted to make the roaming or radio broadcasting coverage area global.

### Disclosure of Invention

It is an object of the present invention to provide a mobile apparatus that can perform roaming without being provided with a region preset table storing frequency information and so forth on an area-by-area basis, a service information provision apparatus that provides this mobile apparatus with various kinds of information necessary when roaming is performed, and a roaming method used by this mobile apparatus.

According to one mode of the present invention, a mobile apparatus performs radio communication by means of a cellular method, and has an identification information storage section that stores identification information of a network provider providing a cellular radio communication service, a transmitting/receiving section that transmits a signal containing the aforementioned identification information and receives a signal containing frequency and access technology information corresponding to the identification information by means of a communication method different from a cellular method, and a frequency search section that carries out a frequency search when roaming is performed using a frequency and access technology corresponding to the identification information indicated by a signal received by the transmitting/receiving section.

In the above mobile apparatus, preferably, the transmitting/receiving section transmits a signal containing the identification information and also receives a signal containing information indicating a frequency, access technology, and service corresponding to the identification information by means of a communication method different from a cellular method, and a service section is also provided that implements a service indicated by a signal received by the transmitting/receiving section.

In the above mobile apparatus, preferably, the communication method different from a cellular method is a wireless LAN or Bluetooth.

According to another mode of the present invention, a service information provision apparatus communicates with a mobile apparatus by means of a communication method different from a cellular method, and has a database indicating the correspondence between a network provider providing a radio communication service by means of the cellular method and a frequency and access technology, a receiving section that receives a signal containing identification information of the network provider transmitted from the mobile station, a control section that extracts frequency and access technology information corresponding to the network provider by searching the database using the identification information contained in a signal received by the receiving section, and a transmitting section that transmits a signal containing frequency and access technology information extracted by the control section to the mobile apparatus.

In the above service information provision apparatus, preferably, the database indicates the correspondence between the network provider and a frequency, access technology, and cellular radio communication service, the control section extracts a frequency, access technology, and cellular radio communication service corresponding to the network provider by searching the database using the identificationinformationcontainedinasignalreceived by the receiving section, and the transmitting section transmits a signal containing information indicating the extracted frequency, access technology, and cellular radio communication service to the mobile apparatus.

In the above service information provision apparatus, preferably, the communication method different from a cellular method is a wireless LAN or Bluetooth.

According to yet another mode of the present invention, a roaming method is a roaming method whereby a mobile apparatus that performs radio communication by means of a cellular method acquires information from a service information provision apparatus by means of a communication method different from the cellular method; and this roaming method has a storing step in which the mobile apparatus stores identification information of a network provider that provides a radio communication service by means of the cellular method, an identification information transmitting step in which the mobile apparatus transmits a signal containing the identification information by means of a communication method different from the cellular method, an identification information receiving step in which the service in formation provision apparatus receives a signal containing the identification information, a searching step in which the service information provision apparatus searches a data base indicating the correspondence between the network provider and a frequency and access technology based on the identification information contained in a signal received in the identification information receiving step, an extracting step in which the service information provision apparatus extracts frequency and access technology information corresponding to the identification information from the database as search results of the search step, a signal transmitting step in which the service information provision apparatus transmits a signal containing frequency and access technology information extracted in the extracting step to the mobile apparatus, a signal receiving step in which the mobile apparatus receives the signal transmitted in the signal transmitting step, and a frequency search step in which the mobile apparatus performs a frequency search when roaming is performed using a frequency and access technology indicated by the signal received in the signal receiving step.

### Brief Description of Drawings

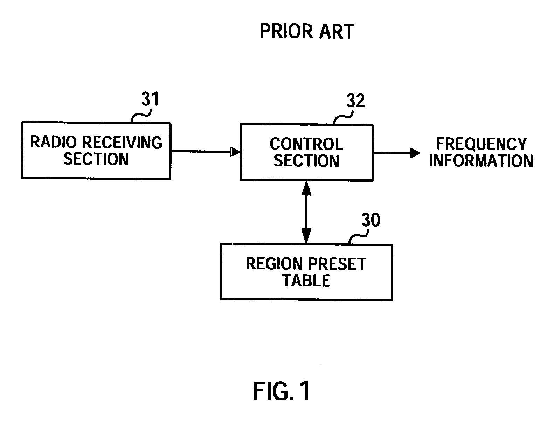

FIG.1 is a block diagram showing the configuration of the region preset function section in a conventional mobile apparatus that automatically adjusts a radio broadcasting reception setting;
FIG.2 is a block diagram showing the configurations of a mobile apparatus and service information provision apparatus according to Embodiment 1 of the present invention; and
FIG.3 is a block diagram showing the configurations of a mobile apparatus and service information provision apparatus according to Embodiment 2 of the present invention.

### Best Mode for Carrying out the Invention

An essential feature of the present invention is that a mobile apparatus that receives provision of a cellular radio communication service reports identification information of a network provider providing that cellular radio communication service to an external service information provision apparatus using a communication method different from the cellular method. Also, an essential feature of the present invention is that the service information provision apparatus to which identification information is reported from the mobile apparatus extracts information on a frequency and access technology that can be used when roaming is performed at the current position of the mobile apparatus from a provided database, and provides this information to the mobile apparatus.

With reference now to the accompanying drawings, embodiments of the present invention will be explained in detail below.

### (Embodiment 1)

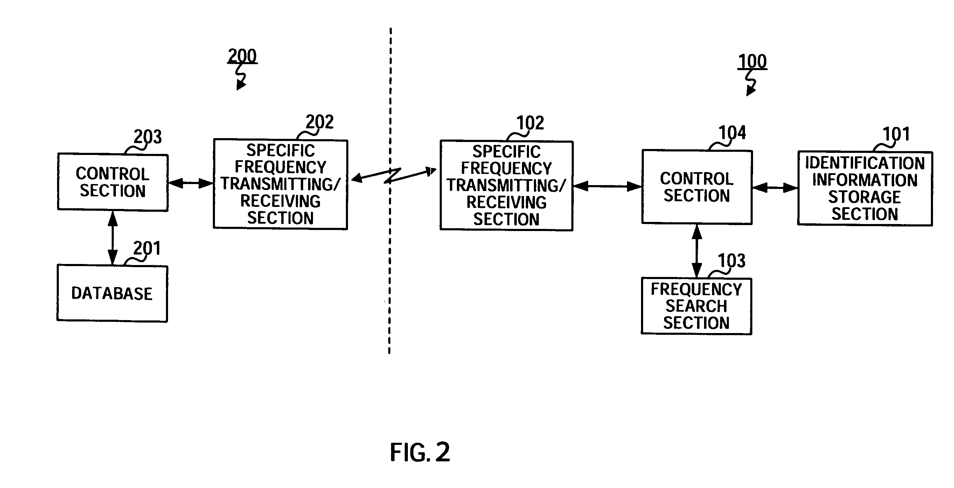

FIG.2 is a block diagram showing the configurations of a mobile apparatus 100 and service information provision apparatus 200 according to Embodiment 1 of the present invention.

Mobile apparatus 100 is a mobile telephone or the like that performs radio communication with a network provider that provides a cellular radio communication service, and has an identification information storage section 101 that stores identification information of a network provider of which the mobile apparatus is a user, a specific frequency transmitting/receiving section 102 that transmits and receives radio signals of a specific frequency by means of a communication method in which the range of reach of radio wave is extremely limited, such as a wireless LAN or Bluetooth, a frequency search section 103 that carries out a frequency search when roaming is performed using information on the frequency and access technology that can be used at the current position of the mobile apparatus obtained via specific frequency transmitting/receiving section 102, and a control section 104 that controls component sections 101 through 103.

Specific frequency transmitting/receiving section 102 performs radio transmission of a signal containing identification information stored in identification information storage section 101, and also receives a radio signal containing information on a frequency and access technology that can be used at the current position of the mobile apparatus transmitted from the external service information provision apparatus 200.

Component parts of control section 104, not shown in the figure, are a CPU (Central Processing Unit), ROM (Read Only Memory) in which a program for controlling this CPU is stored, and RAM (Random Access Memory) that temporarily holds data used by this CPU. Periodically or via manual user operation, control section 104 reads identification information stored in identification information storage section 101, and inputs the read identification information to specific frequency transmitting/receiving section 102. Control section 104 also inputs to frequency search section 103 information on the frequency and access technology that can be used at the current position of the mobile apparatus transmitted from the service information provision apparatus 200 obtained via specific frequency transmitting/receiving section 102.

Meanwhile, service information provision apparatus 200 has a database 201 that holds information on a frequency and access technology that mobile apparatus 100 can use at its current position for each of a plurality of network providers, a specific frequency transmitting/receiving section 202 that performs transmission and reception of radio signals by means of a wireless LAN, Bluetooth, or the like, and a control section 203 that controls the component sections 201 and 202.

Component parts of control section 203, not shown in the figure, are a CPU, ROM that stores a program for controlling this CPU, and RAM that temporarily holds data used by this CPU. When specific frequency transmitting/receiving section 202 receives a radio signal containing identification information indicating a network provider transmitted frommobile apparatus 100, control section 203 searches database 201, extracts frequency and access technology information corresponding to that network provider (identification information), and inputs this extracted information to specific frequency transmitting/receiving section 202.

Specific frequency transmitting/receiving section 202 generates a radio signal containing the information input from control section 203, and transmits that radio signal to mobile apparatus 100.

Next, the operation of mobile apparatus 100 and service information provision apparatus 200 will be described.

First, using a communication method different from a cellular method, such as a wireless LAN or Bluetooth, mobile apparatus 100 transmits to service information provision apparatus 200 a radio signal containing identification information indicating a network provider of which the mobile apparatus is a user.

Service information provision apparatus 200 receives the radio signal transmitted from mobile apparatus 100, searches database 201, and extracts frequency and access technology information corresponding to the identification information contained in that received signal.

Service information provision apparatus 200 then generates a radio signal containing the extracted frequency and access technology information, and transmits the generated radio signal to mobile apparatus 100 via specific frequency transmitting/receiving section 202.

Mobile apparatus 100 receives the radio signal transmitted from service information provision apparatus 200 in specific frequency transmitting/receiving section 102, and obtains the frequency and access technology information contained in that received signal.

Then mobile apparatus 100 carries out a frequency search using frequency search section 103 based on the obtained frequency and access technology information.

Thus, according to this embodiment, a mobile apparatus 100 obtains information on a frequency and access technology that can be used at the current position, required when roaming is performed, from an external service information provision apparatus 200, eliminating the need to provide mobile apparatus 100 with a region preset table, which is absolutely essential in a mobile apparatus equipped with a conventional roaming function. Therefore, according to this embodiment, mobile apparatus 100 does not require an enormous storage element, enabling the manufacturing costs of mobile apparatus 100 to be reduced.

Also, according to this embodiment, since mobile apparatus 100 carries out a frequency search when roaming is performed based on information obtained from external service information provision apparatus 200, the amount of signal processing frequency search in a mobile apparatus 100 can be reduced. As a result, according to this embodiment, mobile apparatus 100 can start a position registration operation in a short time when roaming is performed.

Moreover, according to this embodiment, since the time until the start of a position registration operation when roaming is performed is short, the power consumption of mobile apparatus 100 can be held down.

Furthermore, according to this embodiment, mobile apparatus 100 and service information provision apparatus 200 transmit and receive a radio signal containing information on a frequency and access technology, etc., that can be used at the current position of mobile apparatus 100, by means of a communication method different from a cellular method - that is, a communication method in which the range of reach of radio wave is extremely limited, such as a wireless LAN or Bluetooth - and therefore the coverage area of one service information provision apparatus 200 is necessarily small. Consequently, according to this embodiment, it is possible to prevent mobile apparatus 100 from interfering with a plurality of service information provision apparatuses 200, and to prevent the frequency and access technology used by mobile apparatus 100 frombeing changed at short intervals more often than necessary.

### (Embodiment 2)

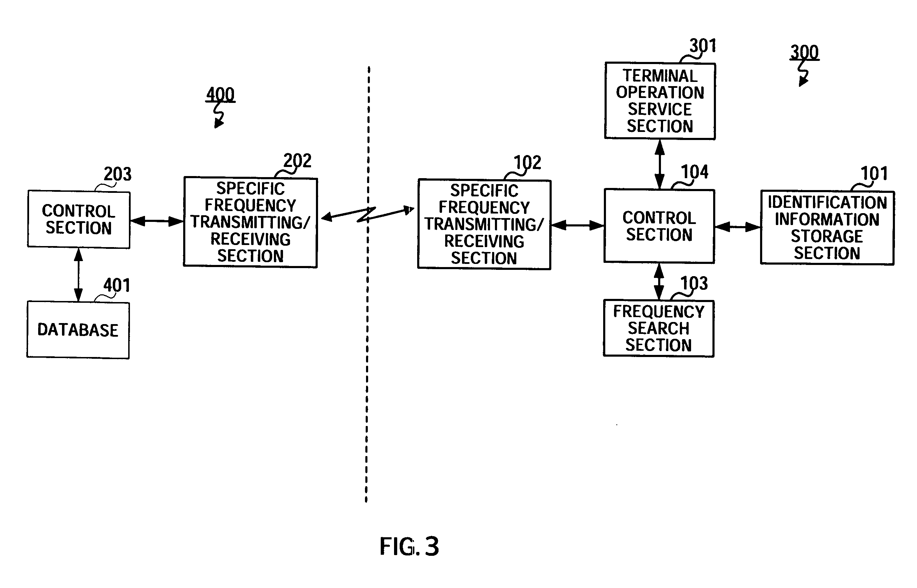

FIG.3 is a block diagram showing the configurations of a mobile apparatus 300 and service information provision apparatus 400 according to Embodiment 2 of the present invention. As mobile apparatus 300 has many component parts that fulfill identical functions to component parts of mobile apparatus 100, and service information provision apparatus 400 has many component parts that fulfill identical functions to component parts of service information provision apparatus 200, such component parts that fulfill identical functions are assigned the same reference codes as component parts of mobile apparatus 100 or service information provision apparatus 200, and its descriptions thereof are omitted.

Mobile apparatus 300 transmits to service information provision apparatus 400 identification information of a network provider of which mobile apparatus 300 is a user, and obtaining from service information provision apparatus 400 information indicating a service that can be used at the current position of mobile apparatus 300, performs an operation in accordance with that service by registering the obtained information indicating that service in a terminal operation service section 301.

Meanwhile, service information provision apparatus 400 has a database 401 that indicates the correspondence between a network provider and information on a frequency and access technology that can be used at the time of mobile apparatus 300 roaming in the coverage area of service information provision apparatus 400, and information indicating services that can be used by mobile apparatus 300. Receiving a radio signal indicating network provider identification information from mobile apparatus 300, service information provision apparatus 400 provides mobile apparatus 300 with information on a frequency and access technology that can be used when mobile apparatus 300 performs roaming, and also with information indicating services that can be used by mobile apparatus 300 in the coverage area of service information provision apparatus 400.

Here, a service that can be used by mobile apparatus 300 is a radio communication service provided by means of a cellular method, examples of which include packet service, mail transmission/reception service, and videophone service. Depending on the area, packet service may not be IP based, mail may not be performed using SMS (Short Message Service) or MMS (Multimedia Messaging Service) based on GSM (Global System for Mobile communications), and videophone services may not be performed. Therefore, even in an area where a communication method is used that differs from such international standards, mobile apparatus 300 can easily use various services by obtaining information indicating services that can be used in that coverage area from service information provision apparatus 400.

The installation location of service information provision apparatus 400 is assumed to be, for example, at a point immediately after passage through an immigration control gate at an international airport, around the outside the ticket barrier of an international railway station (in Europe, etc.), or inside a train in such a railway station.

Thus, according to this embodiment, a mobile apparatus 300 obtains information from a service information provision apparatus 400 indicating services that can be used in its coverage area, may easily use a desired service in all area.

In above-described Embodiments 1 and 2, a wireless LAN, Bluetooth, or the like has been used as the communication method between mobile apparatus 100 and service information provision apparatus 200 and between mobile apparatus 300 and service information provision apparatus 400, but the present invention is not limited to these communication methods, and any communication method may be used as long as it does not cause interference with radio communication services provided by means of a cellular method, and has an extremely limited range of reach of radio wave. For example, optical communication using infrared light or a laser could be used. Also, the present invention is not limited to radio communication, and cable communication (via a cable LAN, for example) may also be used.

This application is based on Japanese Patent Application No.2003-83535 filed on March 25, 2003, the entire content of which is expressly incorporated by reference herein.

### Industrial Applicability

The present invention is applicable to an international roaming method, base station apparatus, relay station, antenna apparatus, mobile apparatus, etc., in a radio communication system using a cellular method.

## Claims

1. A mobile apparatus that performs radio communication by means of a cellular method, said mobile apparatus comprising:
an identification information storage section that stores identification information of a network provider providing a cellular radio communication service;
a transmitting/receiving section that transmits a signal containing said identification information and receives a signal containing frequency and access technology information corresponding to said identification information by means of a communication method different from a cellular method; and
a frequency search section that carries out a frequency search when roaming is performed using a frequency and access technology corresponding to said identification information indicated by a signal received by said transmitting/receiving section.

2. The mobile apparatus according to claim 1, wherein said transmitting/receiving section transmits a signal containing said identification information and also receives a signal containing information indicating a frequency, access technology, and service corresponding to said identification information by means of a communication method different from a cellular method;
said mobile apparatus further comprising a service section that implements a service indicated by a signal received by said transmitting/receiving section.

3. The mobile apparatus according to claim 1, wherein said communication method different from a cellular method is a wireless LAN or Bluetooth.

4. A service information provision apparatus that communicates with a mobile apparatus by means of a communication method different from a cellular method, said service information provision apparatus comprising:
a database indicating correspondence between a network provider providing a radio communication service by means of said cellular method and a frequency and access technology;
a receiving section that receives a signal containing identification information of said network provider transmitted from said mobile station;
a control section that extracts information on frequency and access technology corresponding to said network provider by searching said database using said identification information contained in a signal received by said receiving section; and
a transmitting section that transmits a signal containing information on frequency and access technology extracted by said control section to said mobile apparatus.

5. The service information provision apparatus according to claim 4, wherein:
said database indicates correspondence between said network provider and a frequency, access technology, and cellular radio communication service;
said control section extracts a frequency, access technology, and said cellular radio communication service related to said network provider by searching said database using said identification information contained in a signal received by said receiving section; and
said transmitting section transmits a signal containing information indicating an extracted frequency, access technology, and said cellular radio communication service to said mobile apparatus.

6. The service information provision apparatus according to claim 4, wherein said communication method different from a cellular method is a wireless LAN or Bluetooth.

7. A roaming method whereby a mobile apparatus that performs radio communication by means of a cellular method acquires information from a service information provision apparatus by means of a communication method different from said cellular method; said roaming method comprising:
a storing step in which said mobile apparatus stores identification information of a network provider that provides a radio communication service by means of said cellular method;
an identification information transmitting step in which said mobile apparatus transmits a signal containing said identification information by means of a communication method different from said cellular method;
an identification information receiving step in which said service information provision apparatus receives a signal containing said identification information;
a searching step in which said service information provision apparatus searches a database indicating correspondence between said network provider and a frequency and access technology based on said identificationinformationcontainedinasignalreceived in said identification information receiving step;
an extracting step in which said service information provision apparatus extracts information on frequency and access technology corresponding to said identification information from said database as search results of said search step;
a signal transmitting step in which said service information provision apparatus transmits a signal containing information on frequency and access technology extracted in said extracting step to said mobile apparatus;
a signal receiving step in which said mobile apparatus receives said signal transmitted in said signal transmitting step; and
a frequency search step in which said mobile apparatus performs a frequency search when roaming is performed using a frequency and access technology indicated by a signal received in said signal receiving step.
